# EUROPÄISCHE PATENTSCHRIFT

(11) **EP 3 755 582 B1**
(45) Veröffentlichungstag und Bekanntmachung des Hinweises auf die Patenterteilung: **01.12.2021**
(21) Anmeldenummer: 19703662.7
(22) Anmeldetag: 01.02.2019
(51) Int. Cl.: B60R 21/26

(54) **VENTIL FÜR EIN AIRBAGSYSTEM FÜR EIN KRAFTFAHRZEUG UND AIRBAGSYSTEM FÜR EIN KRAFTFAHRZEUG**
VALVE FOR A MOTOR VEHICLE AIRBAG SYSTEM AND MOTOR VEHICLE AIRBAG SYSTEM
SOUPAPE DE SYSTÈME DE COUSSIN GONFLABLE DE VÉHICULE AUTOMOBILE ET SYSTÈME DE COUSSIN GONFLABLE DE VÉHICULE AUTOMOBILE

(30) Priorität: 22.02.2018 DE 102018202722
(43) Veröffentlichungstag der Anmeldung: 30.12.2020
(73) Patentinhaber: Vitesco Technologies GmbH, 93055 Regensburg (DE)
(72) Erfinder: BLEECK, Matthias, 93080 Pentling (DE); AUMÜLLER, Christoph, 93167 Falkenstein (DE)
(86) Internationale Anmeldenummer: PCT/EP2019/052473
(87) Internationale Veröffentlichungsnummer: WO 2019/162060

(56) Entgegenhaltungen:
- WO-A1-2008/040542
- WO-A1-2008/086963
- DE-A1-102012 210 943

## Beschreibung

Die Erfindung betrifft ein Ventil für ein Airbagsystem für ein Kraftfahrzeug. Die Erfindung betrifft weiterhin ein Airbagsystem für ein Kraftfahrzeug, das ein derartiges Ventil aufweist.

Bei herkömmlichen Airbagsystemen für ein Kraftfahrzeug wird im Fall eines Aufpralls eine Airbagzündung gestartet. Gas strömt anschließend in den Airbag, um den Airbag zu füllen.

Aus der Offenlegungsschrift DE 10 2012 210943 A1 ist ein Ventil für ein Airbagsystem gemäß dem Oberbegriff des Anspruchs 1 bekannt.

Es ist wünschenswert, ein Ventil für ein Airbagsystem für ein Kraftfahrzeug anzugeben, das eine variable Füllung des Airbags ermöglicht. Es ist weiterhin wünschenswert, ein Airbagsystem anzugeben, das eine variable Füllung des Airbags ermöglicht.

Gemäß zumindest einer Ausführungsform weist ein Ventil für ein Airbagsystem für ein Kraftfahrzeug ein Gehäuse auf. Das Gehäuse erstreckt sich entlang einer Längsachse. Das Gehäuse umgibt einen Hohlraum. Das Gehäuse umgibt den Hohlraum so, dass eine Verjüngung ausgebildet ist. Das Gehäuse umgibt zudem einen Steuerraum. Das Ventil weist ein elektrisch schaltbares Pilotventil auf. Das Pilotventil gibt eine Pilotöffnung des Steuerraums wahlweise frei oder verschließt die Pilotöffnung. Das Ventil weist einen Kolben auf. Der Kolben ist in dem Hohlraum angeordnet. Der Kolben ist entlang der Längsachse relativ zu dem Gehäuse verschiebbar. Das Ventil weist eine Ausgleichsleitung auf. Die Ausgleichsleitung verbindet einen Einlass des Ventils mit dem Steuerraum zur fluiden Kommunikation zwischen dem Einlass und dem Steuerraum. An der Verjüngung ist ein Dichtsitz ausgebildet, um einen Gasstrom von dem Einlass zu einem Auslass des Ventils in einer Schließposition zu sperren. In der Schließposition ist der Kolben in Kontakt mit dem Dichtsitz. In weiteren Positionen wird der Gasstrom von dem Einlass zu dem Auslass freigegeben, insbesondere wenn der Kolben nicht in Kontakt mit dem Dichtsitz ist. Der Steuerraum ist auf einer dem Dichtsitz abgewandten Seite des Kolbens angeordnet. Der Kolben weist auf der dem Dichtsitz zugewandten Seite einen ersten Durchmesser auf. Auf der gegenüberliegenden Seite weist der Kolben einen zweiten Durchmesser auf. Der erste Durchmesser ist kleiner als der zweite Durchmesser.

Das Ventil wird insbesondere als Füllventil für einen Airbag verwendet. Das Ventil ermöglicht ein gezieltes Dosieren von Gas eines Gasgenerators zum Airbag. Somit ist der Airbag variabel mit Gas füllbar, beispielsweise in Abhängigkeit von einem Unfallverlauf. Alternativ oder zusätzlich ist es möglich, den Airbag mittels des Ventils in Abhängigkeit von einem Gewicht und/oder einer Größe eines Nutzers zu füllen. Beispielsweise ist es möglich, den Airbag mittels des Ventils in einer Phase vor dem Aufprall, in dem der Aufprall jedoch unvermeidbar ist, bereits vorzufüllen, und im weiteren Verlauf die Füllung des Airbags gezielt, an den Unfallverlauf angepasst, durchzuführen. Das Ventil ermöglicht eine Regelung des Gasstroms aus dem Gasgenerator in den Airbag. Das Ventil ist robust und kompakt. Dadurch, dass der zweite Durchmesser größer ist als der erste Durchmesser ist es möglich, mit einem klein dimensionierten Pilotventil vergleichsweise große Massenströme zu steuern.

Bei geschlossenem Pilotventil herrscht auf der dem Dichtsitz zugewandten Seite des Kolbens und auf der gegenüberliegenden Seite des Kolbens in etwa der gleiche Druck. Der Druck kann sich über die Ausgleichsleitung ausgleichen. Bei geöffnetem Pilotventil strömt Gas aus dem Steuerraum durch die Pilotöffnung. Somit reduziert sich der Druck auf der dem Dichtsitz abgewandten Seite des Kolbens. Der Kolben wird aufgrund der daraus resultierenden Kräfte vom Dichtsitz wegbewegt und gibt somit einen Gasfluss vom Einlass zum Auslass frei.

Gemäß zumindest einer Ausführungsform ist die Ausgleichsleitung in dem Kolben angeordnet. Dies ermöglicht eine einfache und effiziente Herstellung der Ausgleichsleitung. Alternativ oder zusätzlich ist die Ausgleichsleitung in dem Gehäuse angeordnet. Dies ermöglicht beispielsweise einen größeren Querschnitt für die Ausgleichsleitung.

Gemäß zumindest einer Ausführungsform weist das Ventil eine Feder auf, um eine Kraft auf den Kolben in Richtung des Dichtsitzes auszuwirken. Die Feder stützt sich beispielsweise mit einem Ende an dem Kolben ab und an einem gegenüberliegenden Ende an dem Gehäuse. Die Feder drückt den Kolben somit gegen den Dichtsitz. Somit ist es möglich, bei geöffnetem Ventil eine definierte Lage für den Kolben zu realisieren. Somit sind die Schaltzeiten des Ventils definierter. Insbesondere ist die Vorspannung aufgrund der Feder im Vergleich zu der Kraft aufgrund des Drucks im Steuerraum geringer. In Abhängigkeit von der Feder und dem zweiten Durchmesser des Kolbens sowie dem Druck im Steuerraum stellt sich ein Öffnungsdruck des Ventils ein, bei dem das Ventil öffnet.

Gemäß zumindest einer Ausführungsform ist ein Verhältnis des ersten Durchmessers zu dem zweiten Durchmesser so eingestellt, dass in der Schließposition bei Druckausgleich im Einlass und im Steuerraum eine vorgegebene Schließkraft auf den Kolben in Richtung des Dichtsitzes wirkt. In Abhängigkeit des Verhältnisses der beiden Durchmesser zueinander ist die Schließkraft in Abhängigkeit des Drucks einstellbar. Je größer der zweite Durchmesser im Vergleich zum ersten Durchmesser desto größer ist die resultierende Kraft, die den Kolben in Richtung des Dichtsitzes drückt.

Gemäß zumindest einer Ausführungsform weist das Pilotventil einen Anker auf, der abhängig von einer Bestromung des Pilotventils relativ zu dem Gehäuse verschiebbar ist. Das Pilotventil weist ein Dichtelement auf, das mit dem Anker des Pilotventils gekoppelt ist. Das Dichtelement ist relativ zu der Pilotöffnung verschiebbar, um die Pilotöffnung wahlweise zu verschließen oder freizugeben. Der Anker kann genau wie das gesamte Pilotventil vergleichsweise klein ausgebildet werden. Aufgrund des größeren zweiten Durchmessers im Vergleich zum ersten Durchmesser sind dennoch genügend große Kräfte zum Öffnen und Schließen des Ventils im Betrieb vorhanden. Der Anker wird beispielsweise aufgrund von Magnetkräften einer Spule und eines Polstücks bei Bestromung der Spule mit elektrischen Strom bewegt.

Gemäß zumindest einer Ausführungsform ist ein Verhältnis eines Querschnitts der Pilotöffnung zu einem Querschnitt der Ausgleichsleitung so eingestellt, dass bei freigegebener Pilotöffnung ein Druck im Steuerraum kleiner ist als ein Minimaldruck um den Kolben vom Dichtsitz abzuheben. Dadurch wird bei geöffnetem Pilotventil sichergestellt, dass das Ventil verlässlich und in einer vorgegebenen Zeit öffnet. Beispielsweise ist der Querschnitt der Pilotöffnung größer als der Querschnitt der Ausgleichsleitung, insbesondere größer als der kleinste Querschnitt der Ausgangsleitung. Somit kann mehr Gas aus dem Steuerraum abfließen als Gas über die Ausgleichsleitung in den Steuerraum nachströmen kann. Alternativ ist der Querschnitt der Ausgleichsleitung größer als der Querschnitt der Pilotöffnung. Dies ermöglicht einen schnellen Druckausgleich zwischen dem Einlass und dem Steuerraum.

Gemäß zumindest einer Ausführungsform ist das Pilotventil als stromlos offenes Ventil ausgebildet. Somit ist ein Befüllen des Airbags auch bei Ausfall einer Stromversorgung möglich.

Gemäß zumindest einer Ausführungsform ist das Pilotventil als stromlos geschlossenes Ventil ausgebildet. Dies verhindert ein Überfüllen des Ventils bei Ausfall der Stromversorgung des Ventils.

Ein Airbagsystem für ein Kraftfahrzeug weist das Ventil gemäß zumindest einer Ausführungsform auf. Das Airbagsystem weist gemäß zumindest einer Ausführungsform einen Gasgenerator auf, der mit dem Einlass verbunden ist. Der Gasgenerator ist ein Heißgasgenerator, ein Kaltgasgenerator und/oder ein Hybridgasgenerator. Beispielsweise ist der Gasgenerator eingerichtet, Gas mit einem Druck von bis zu 700 bar bereitzustellen. Das Airbagsystem weist einen Airbag auf, der mit dem Auslass verbunden ist. Mittels des Ventils ist es somit möglich, Gas des Gasgenerators einmal oder wiederholt dem Airbag zuzuführen.

Weitere Vorteile, Merkmale und Weiterbildungen ergeben sich aus den nachfolgenden, in Verbindung mit den Figuren erläuterten Beispielen. Gleiche, gleichartige und gleichwirkende Elemente können darin mit den gleichen Bezugszeichen versehen sein.

Es zeigen:
Figur 1 eine schematische Darstellung eines Ventils gemäß einem Ausführungsbeispiel,
Figur 2 eine schematische Darstellung eines Ventils gemäß einem Ausführungsbeispiel,
Figur 3 eine schematische Darstellung eines Ventils gemäß einem Ausführungsbeispiel, und
Figur 4 eine schematische Darstellung eines Ventils gemäß einem Ausführungsbeispiel.

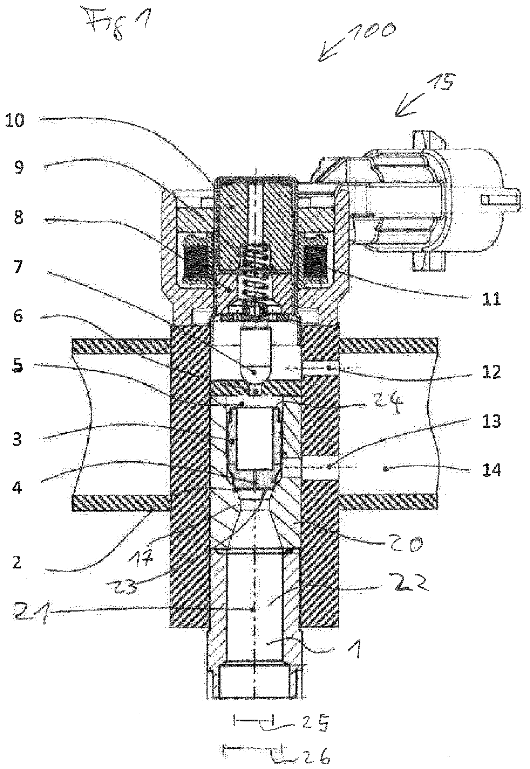

Figur 1 zeigt eine schematische Darstellung eines Ventils 100 für ein Airbagsystem eines Kraftfahrzeugs gemäß einem Ausführungsbeispiel. Das Ventil 100 dient zum Zumessen von Gas aus einem Gasgenerator (nicht explizit dargestellt) zu einem Airbag (nicht explizit dargestellt). Das Airbagsystem mit dem Airbag, dem Ventil 100 und dem Gasgenerator ist beispielsweise Teil eines Rückhaltesystems des Kraftfahrzeugs. Es dient beispielsweise zum Schutz vor Verletzungen bei einem Aufprall des Kraftfahrzeugs.

Beispielsweise wird mittels Sensoren bereits vor dem Aufprall erkannt, wenn der Aufprall unvermeidbar ist. Der Beginn dieser sogenannten Precrash-Phase liegt somit vor dem Zeitpunkt des Aufpralls. Das Ventil 100 ermöglicht ein teilweises Füllen des Airbags beispielsweise schon während dieser sogenannten Precrash-Phase. Auch nach dem Aufprall ist es mittels des Ventils 100 möglich, den Airbag bedarfsgerecht zu füllen. Beispielsweise wird zu mehreren unterschiedlichen Zeitpunkten jeweils eine unterschiedliche Menge Gas mittels des Ventils 100 in den Airbag zugemessen. Alternativ oder zusätzlich ist es möglich, die Füllung des Airbags mittels des Ventils 100 in Abhängigkeit von weiteren Einflussgrößen wie beispielsweise Eigenschaften des Nutzers zu steuern, beispielsweise in Abhängigkeit einer Größe und/oder eines Gewichts des Nutzers. Das Ventil 100 ermöglicht eine Füllung des Airbags gezielt an dem Unfallverlauf angepasst durchzuführen. Das Ventil 100 ermöglicht eine Regelung des Gasstroms aus dem Generator in den Airbag. Somit ist der Füllverlauf des Airbags regelbar. Insbesondere können mehrstufige zeitversetzte Füllungen erfolgen.

Das Ventil 100 weist ein Gehäuse 20 auf. Das Gehäuse 20 ist beispielsweise aus mehreren Einzelteilen zusammengesetzt. Das Gehäuse 20 erstreckt sich entlang einer Längsachse 21. Das Gehäuse 20 umgibt einen Hohlraum 22. Der Hohlraum 22 ist ebenfalls entlang der Längsachse 21 ausgedehnt.

Das Ventil 100 weist einen Einlass 1 auf. Der Einlass 1 ist insbesondere mit dem Hohlraum 22 verbunden. Der Einlass 1 ist im betriebsfertigen Zustand mit dem Gasgenerator verbunden, sodass Gas aus dem Gasgenerator in den Einlass 1 strömen kann.

Das Ventil 100 weist einen Auslass 14 auf. Der Auslass 14 ist im betriebsfertigen Zustand mit dem Airbag verbunden, sodass Gas aus dem Ventil 100 durch den Auslass 14 in den Airbag gelangen kann.

Das Ventil 100 dient zum Steuern des Gasflusses zwischen dem Einlass 1 und dem Auslass 14.

Das Ventil 100 weist einen Kolben 3 auf. Der Kolben 3 ist in dem Hohlraum 22 angeordnet. Der Kolben 3 ist entlang der Längsachse 21 relativ zum Gehäuse 20 verschiebbar.

In der dargestellten Position ist der Kolben 3 an einer Seite 23 in Kontakt mit einem Dichtsitz 2 des Gehäuses 20. In dieser Schließposition verhindert der Kolben 3 mittels des Kontakts mit dem Dichtsitz 2 einen Gasfluss von dem Einlass 1 zu dem Auslass 14.

Der Dichtsitz 2 ist insbesondere an einer Verjüngung 17 des Gehäuses 20 ausgebildet. An der Verjüngung 17 weist der Hohlraum einen kleineren Durchmesser quer zur Längsachse 21 auf als außerhalb der Verjüngung 17.

Zum Bewegen des Kolbens 3 und damit zum Öffnen und Schließen des Ventils 100 weist das Ventil 100 ein Pilotventil 15 auf. Das Pilotventil 15 ist ein elektrisch schaltbares Ventil. Das Pilotventil 15 weist eine Spule 11 auf, die im betriebsfertigen Zustand mit einer elektrischen Energieversorgung verbunden ist. Das Pilotventil 15 weist weiterhin ein Polstück 10 auf. Das Polstück 10 und die Spule 11 sind mit dem Gehäuse 20 gekoppelt. Das Pilotventil 15 weist einen Anker 8 auf, der relativ zu dem Polstück 11 und dem Gehäuse 20 entlang der Längsachse 21 verschiebbar ist. Eine Druckfeder 9 des Pilotventils 15 drückt den Anker 8 in Richtung des Kolbens 3. Mit dem Anker 8 ist ein Dichtelement 7 des Pilotventils 15 gekoppelt. Das Dichtelement 7 folgt einer Bewegung des Ankers 8 entlang der Längsachse 21.

Das Gehäuse 20 weist eine Pilotöffnung 6 auf. Die Pilotöffnung 6 ist mittels des Dichtelements 7 des Pilotventils 15 verschließbar. Wenn sich das Dichtelement 7 von der Pilotöffnung 6 wegbewegt, ist die Pilotöffnung 6 freigegeben.

Im dargestellten Ausführungsbeispiel der Figur 1 ist das Pilotventil 15 als stromlos geschlossenes Ventil ausgebildet. Die Feder 9 drückt das Dichtelement 7 gegen die Pilotöffnung 6. Im unbestromten Zustand verschließt das Dichtelement 7 somit die Pilotöffnung 6. Wenn elektrischer Strom durch die Spule 11 fließt wirkt eine Magnetkraft entgegen der Federkraft der Druckfeder 9. Diese bewegt den Anker 8 und damit das Dichtelement 7 weg von der Pilotöffnung 6. Somit wird ein Gasstrom durch die Pilotöffnung 6 möglich.

In dem Kolben 3 ist eine Ausgleichsleitung 4 ausgebildet. Die Ausgleichsleitung 4 ermöglicht einen Gasfluss von dem Einlass 1 zu einem Steuerraum 5. Die Ausgleichsleitung 4 ermöglicht eine fluide Kommunikation zwischen dem Einlass 1 und dem Steuerraum 5. Insbesondere sind der Steuerraum 5 und der Einlass 1 mittels der Ausgleichsleitung 4 miteinander pneumatisch verbunden.

Der Steuerraum 5 ist zwischen der Pilotöffnung 6 und dem Kolben 3 ausgebildet. Der Steuerraum 5 ist auf einer dem Dichtsitz 2 abgewandten Seite 24 des Kolbens 3 vorgesehen. Der Steuerraum wird von dem Kolben 3 und dem Dichtelement 7 begrenzt, wenn das Dichtelement 7 in seiner Schließposition ist. Zudem begrenzt das Gehäuse 20 den Steuerraum 5. Im Betrieb kann Gas durch die Ausgleichsleitung 4 in den Steuerraum 5 gelangen. Bei geöffnetem Dichtelement 7 kann das Gas durch die Pilotöffnung 6 aus dem Steuerraum 5 ausströmen. Bei geschlossenem Dichtelement 7 ermöglicht die Ausgleichsleitung 4 einen Druckausgleich zwischen dem Steuerraum 5 und dem Einlass 1.

Der Kolben 3 weist quer zur Längsachse 21 an der dem Dichtsitz 2 zugewandten Seite 23 einen ersten Durchmesser 25 auf. Auf der dem Steuerraum 5 zugewandten Seite 24 weist der Kolben 3 einen zweiten Durchmesser 26 auf. Der zweite Durchmesser 26 ist größer als der erste Durchmesser 25. Der Kolben 3 ist so ausgebildet, dass er sich in Richtung der Seite 23 zumindest abschnittsweise verjüngt. Somit ist die Fläche quer zur Längsachse 21 der Seite 23 des Kolbens 3 kleiner als die Fläche quer zur Längsachse 21 der Seite 24 des Kolbens 3.

Der bewegliche Kolben 3 ist mittels des Pilotventils 15 ansteuerbar. Ohne Strombeaufschlagung verschließt das Pilotventil 15 mit dem Dichtelement 7 die Pilotöffnung 6 aufgrund der Federkraft der Druckfeder 9. Die Druckfeder 9 ist in einem Bereich zwischen dem beweglichen Anker 8 und dem Polstück 10 eingespannt. Bei einer Strombeaufschlagung der Spule 11 wird ein Magnetfeld aufgebaut. Die daraus resultierende Magnetkraft zwischen dem Anker 8 und dem Polstück 10 wirkt gegen die Kraft der Druckfeder 9. Zu dem Zeitpunkt, zudem die Kraft der Druckfeder 9 von der Magnetkraft zwischen dem Anker 8 und dem Polstück 10 überwunden wird, schaltet das Pilotventil 15. Der Abstand zwischen dem Anker 8 und dem Polstück 10 entlang der Längsachse 21 wird verringert und das Dichtelement 7 gibt den Querschnitt der Pilotöffnung 6 frei. Dadurch kann Gas durch die Pilotöffnung 6 fließen. Das Gas wird beispielsweise über einen Ausgang 12 oder mehrere derartige Ausgänge zum Auslass 14 abgeleitet.

Der Kolben 3 ist als Sitzventil ausgeführt. Im geschlossenen Zustand verschließt der Kolben 3 das Ventil 100 mittels dem Kontakt mit dem Dichtsitz 2. An dem Dichtsitz 2 weist der Kolben 3 den ersten Durchmesser 25 auf, der kleiner ist als der Außendurchmesser des Kolbens 3. Die Fläche an der Seite 23 des Kolbens 3, auf die im Betrieb Druck des Gases im Einlass 1 wirkt, wird durch den Durchmesser des Dichtsitzes 2 vorgegeben. Die Fläche an der Seite 24 des Kolbens 3, auf die im Betrieb Druck des Gases im Steuerraum 5 wirkt, wird durch den zweiten Durchmesser 26 des Kolbens 3 vorgegeben, der insbesondere dem Außendurchmesser des Kolbens 3 entspricht.

Die Fläche an der Seite 24 des Kolbens 3 im Bereich des Steuerraums 5 ist folglich größer als die Fläche an der Seite 23 des Kolbens 3 im Bereich des Dichtsitzes 2. Wird der Kolben 3 mit dem gleichen Druck gleichzeitig im Steuerraum 5 und an dem Dichtsitz 2 beaufschlagt, wirkt vom Bereich des Steuerraums 5 aufgrund der größeren Fläche an der Seite 24 eine größere Kraft auf den Kolben 3 in Richtung des Dichtsitzes 2 als die Kraft, die vom Einlass 1 und dem Dichtsitz 2 auf den Kolben 3 in Richtung weg vom Dichtsitz 2 wirkt. Folglich schließt der Kolben 3 und wird gegen den Dichtsitz 2 gedrückt.

Wenn der Gasgenerator aktiviert wird, steigt der Druck im Einlass 1 des Ventils 100. Der Gasdruck steht auch im Bereich des Dichtsitzes 2 an. Das Pilotventil 15 in der stromlos geschlossenen Variante ist geschlossen. Durch den Staudruck in dem Bereich des Einlasses 1 am Dichtsitz 2 gelangt Gas durch die Ausgleichsleitung 4 in den Steuerraum 5. Nach kurzer Zeit hat sich der Druck im Steuerraum 5 mit dem Druck im Einlass 1 im Bereich des Dichtsitzes 2 ausgeglichen. Der Kolben 3 verschließt weiterhin das Ventil.

Um eine Gasmenge aus dem Einlass 1 zum Auslass 14 und zum Airbag zu dosieren, wird das Pilotventil 15 mit Strom beaufschlagt. Das Pilotventil 15 gibt daraufhin die Pilotöffnung 6 frei. Dadurch fällt der Druck im Steuerraum 5 ab. Der Kolben schaltet und gibt somit den Querschnitt im Bereich des Dichtsitzes 2 frei. Somit kann Gas aus dem Einlass 1 entlang dem Dichtsitz 2 zu einem Ausgang 13 und damit zum Auslass 14 gelangen. Die Massenströme des Gases aus dem Ausgang 12 des Pilotventils 15 und aus dem Ausgang 13 werden gesammelt und dem Auslass 14 zum Airbag zugeführt.

Um den Massestrom des Gases zum Auslass 14 wieder zu stoppen, wird das Pilotventil 15 wieder geschlossen. Daraufhin findet wieder ein Druckausgleich zwischen dem Steuerraum 5 und dem Einlass 1 statt. Aufgrund des größeren zweiten Durchmessers 26 und der daraus resultierenden größeren Kraft wird der Kolben 3 wieder an den Dichtsitz 2 gedrückt.

Durch die Ansteuerung des Pilotventils 15 kann einmal oder wiederholt eine Gasmenge dem Airbag zugeführt werden.

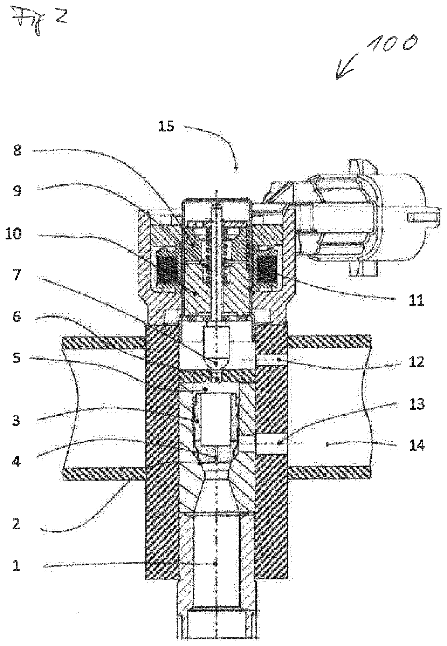

Figur 2 zeigt das Ventil 100 gemäß einem weiteren Ausführungsbeispiel. Das Ventil 100 entspricht im Wesentlichen dem Ausführungsbeispiel der Figur 1. Im Unterschied zur Figur 1 ist das Pilotventil 15 als stromlos offenes Ventil ausgebildet. Die Druckfeder 9 drückt das Dichtelement 7 von der Pilotöffnung 6 weg. Bei einer Aktivierung des Gasgenerators ist das Ventil 100 geöffnet und der Kolben 3 beabstandet zu dem Dichtsitz 2 angeordnet. Somit gelangt Gas von dem Einlass 1 zu dem Auslass 14.

Bei einer Strombeaufschlagung der Spule 11 wird die Pilotöffnung 6 geschlossen. Das Ventil 100 schließt ebenfalls, da der Kolben 3 gegen den Dichtsitz 2 gedrückt wird.

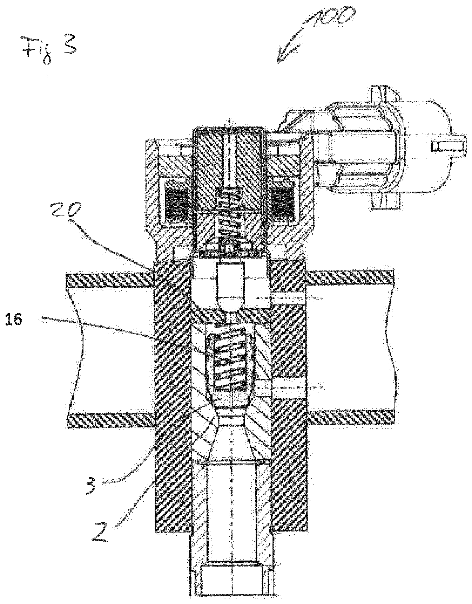

Figur 3 zeigt das Ventil 100 gemäß einem weiteren Ausführungsbeispiel. Das Ausführungsbeispiel der Figur 3 entspricht im Wesentlichen dem Ausführungsbeispiel der Figur 1. Zusätzlich ist eine weitere Feder 16 vorgesehen. Die Feder 16 stützt sich mit einem Ende an dem Gehäuse 20 ab. Entlang der Längsachse 21 stützt sich die Feder an einem entgegengesetzten Ende am Kolben 3 ab. Die Feder 16 wirkt eine Kraft entlang der Längsachse 21 auf den Kolben 3 in Richtung zum Dichtsitz 2 aus. Somit ist der Kolben 3 im Gehäuse 20 vorgespannt. Die Funktionsweise des Ventils 100 entspricht der Funktionsweise wie in Zusammenhang mit dem Ausführungsbeispiel der Figur 1 beschrieben. Zusätzlich weist der Kolben 3 nach der Druckbeaufschlagung durch das Gas aus dem Gasgenerator eine definierte Lage auf. Somit sind die Schaltzeiten des Ventils 100 definierter. Die Feder 16 ist so ausgelegt, dass die Federvorspannung im Vergleich zu der Druckkraft auf den Kolben 3 in Richtung weg vom Dichtsitz 2 geringer ist, insbesondere bei geöffnetem Pilotventil 15. Aus den resultierenden Kräften der Feder 16 und der Drücke im Einlass 1 und im Steuerraum 5 stellt sich der Öffnungsdruck des Ventils 100 ein, bei dem das Ventil 100 öffnet.

Auch bei einem Ventil 100 mit einem stromlos offenen Pilotventil 15 gemäß dem Ausführungsbeispiel der Figur 2 ist gemäß Ausführungsbeispielen eine Feder 6 vorgesehen.

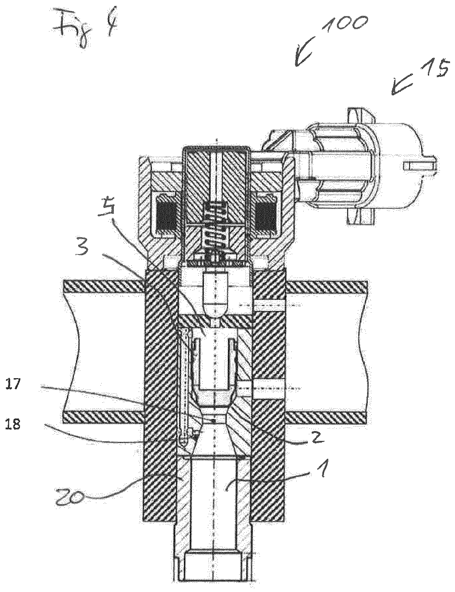

Figur 4 zeigt das Ventil 100 gemäß einem weiteren Ausführungsbeispiel. Das Ventil 100 der Figur 4 entspricht im Wesentlichen dem Ausführungsbeispiel der Figur 1. Im Unterschied zur Figur 1 ist im Kolben 3 keine Ausgleichsleitung 4 vorgesehen. Stattdessen ist eine Ausgleichsleitung 18 im Gehäuse 20 des Ventils 100 ausgebildet. Die Ausgleichsleitung 18 verbindet den Einlass 1 mit dem Steuerraum 5. Die Ausgleichsleitung 18 hat folglich die gleiche Funktion wie die Ausgleichsleitung 4 der Figuren 1 bis 3. Die Ausgleichsleitung 18 ermöglicht einen Druckausgleich zwischen dem Steuerraum 5 und dem Einlass 1 bei geschlossenen Ventil 100, wenn der Kolben 3 in Kontakt mit dem Dichtsitz 2 ist.

Die Ausgleichsleitung 18 ist gemäß Ausführungsbeispielen entlang der Längsachse 21 auf einer vom Kolben 3 abgewandten Seite der Verjüngung 17 mit dem Einlass 1 verbunden, wie in Figur 4 dargestellt. Gemäß weiteren Ausführungsbeispielen ist die Ausgleichsleitung 18 auf einer dem Kolben 3 zugewandten Seite der Verjüngung 17 beziehungsweise des Einlasses 1 mit dem Einlass 1 verbunden.

Eine Verbindung zwischen dem Steuerraum 5 und dem Einlass 1 mittels der Ausgleichsleitung 18 in dem Gehäuse 20 ist auch bei den Ausführungsbeispielen mit stromlos offenem Pilotventil 15 möglich. Zudem ist die Kombination mit der Feder 16 möglich. Gemäß weiteren Ausführungsbeispielen sind sowohl die Ausgleichsleitung 4 im Kolben 3 als auch die Ausgleichsleitung 18 im Gehäuse 20 vorgesehen. Auch dies ist mit oder ohne Feder 16 möglich. Es ist auch möglich, eine Ausgleichsleitung am Außenumfang des Kolbens 3 zwischen dem Kolben 3 und dem Gehäuse 20 vorzusehen. Allgemein muss die Ausgleichsleitung lediglich einen Druckausgleich zwischen dem Steuerraum 5 und dem Einlass 1 ermöglichen, ohne dass ein Gasfluss vom Einlass 1 zum Auslass 14 ermöglicht wird.

Der Querschnitt der Pilotöffnung 6 ist gemäß Ausführungsbeispiel größer als der Querschnitt der Ausgleichsleitung 4, 18, insbesondere größer als der kleinste Querschnitt der Ausgleichsleitung 4, 18. Somit kann bei geöffnetem Pilotventil 15 mehr Gas aus dem Steuerraum 5 über die Pilotöffnung 6 abfließen als Gas über die Ausgleichsleitung 4, 18 in den Steuerraum 5 nachfließt. Dadurch fällt der Druck im Steuerraum 5 ab.

Gemäß weiteren Ausführungsbeispielen ist der Querschnitt der Pilotöffnung 6 kleiner als der Querschnitt der Ausgleichsleitung 4, 18. Dies ermöglicht ein schnelles Schalten des Kolbens 3 bei geöffneter Pilotöffnung 6. Der Druck im Steuerraum 5 bei geöffneter Pilotöffnung 6 ermöglicht ein Abheben des Kolbens 3 vom Dichtsitz 2 aufgrund des Drucks in dem Einlass 1.

Die einzelnen Elemente und Merkmale der unterschiedlichen Ausführungsbeispiele des Ventils 100 können einzeln und unabhängig voneinander in unterschiedlichen Ausführungsbeispielen miteinander kombiniert werden. Beispielsweise ist es möglich, das stromlos offene Pilotventil 15 und das stromlos geschlossene Pilotventil 15 gegeneinander auszutauschen. Entsprechend ist es möglich das Ventil 100 unabhängig von den anderen Elementen mit der Feder 16 und dem damit vorgespannten Kolben 3 vorzusehen oder ohne die Feder 16. Die Anordnung der Ausgleichsleitung 4, 18 zum Druckausgleich zwischen dem Steuerraum 5 und dem Einlass 1 ist unabhängig von den anderen Elementen des Ventils 100 möglich. Die Öffnungen des Ventils 100, beispielsweise die Pilotöffnung 6, die Ausgänge 12,13 und/oder der Hohlraum 22 sind gemäß Ausführungsbeispielen als Bohrungen ausgebildet. Die Komponenten des Ventils 100 werden je nach vorgegebenem Sicherheitskonzept des Airbagsystems vorgegeben. Es können unterschiedliche Funktionen des Ventils 100 entsprechend Vorgaben für das Airbagsystem realisiert werden. Somit ist ein variantenreiches, robustes und kompaktes Airbagsystem realisierbar. Das Ventil 100 mit der vorgesteuerten Bauform ermöglicht eine Steuerung großer Massenströme vom Einlass 1 zum Auslass 14 mit einem relativ kleinen Pilotventil 15. Zum Füllen des Airbags ist eine Steuerung beziehungsweise Regelung des Gasstroms aus dem Gasgenerator in den Airbag möglich.

## Patentansprüche

1. Ventil für ein Airbagsystem für ein Kraftfahrzeug, aufweisend:
- ein Gehäuse (20), das sich entlang einer Längsachse (21) erstreckt und die einen Hohlraum (22) mit einer Verjüngung (17) und einen Steuerraum (5) umgibt,
- ein elektrisch schaltbares Pilotventil (15), das eine Pilotöffnung (6) des Steuerraums (5) wahlweise verschließt oder freigibt,
- einen Kolben (3), der in dem Hohlraum (22) angeordnet ist und entlang der Längsachse (21) relativ zu dem Gehäuse (20) verschiebbar ist,
- eine Ausgleichsleitung (4, 18), die einen Einlass (1) des Ventils (100) mit dem Steuerraum (5) zur fluiden Kommunikation verbindet,
**dadurch gekennzeichnet, dass**
- an der Verjüngung (17) ein Dichtsitz (2) ausgebildet ist, um einen Gasstrom von dem Einlass (1) zu einem Auslass (14) des Ventils (100) in einer Schließposition zu sperren, in der der Kolben (3) in Kontakt mit dem Dichtsitz (2) ist, und in weiteren Positionen freizugeben,
- der Steuerraum (5) an einer dem Dichtsitz (2) abgewandten ersten Seite (24) des Kolbens (3) angeordnet ist, und
- der Kolben (3) an einer dem Dichtsitz (2) zugewandten Seite (23) einen ersten Durchmesser (25) aufweist und an der ersten Seite (24) einen zweiten Durchmesser (26) aufweist, wobei der erste Durchmesser (25) kleiner ist als der zweite Durchmesser (26) .

2. Ventil nach Anspruch 1, bei dem die Ausgleichsleitung (4) in dem Kolben (3) angeordnet ist.

3. Ventil nach Anspruch 1 oder 2, bei dem die Ausgleichleitung (18) in dem Gehäuse (20) angeordnet ist.

4. Ventil nach einem der Ansprüche 1 bis 3, aufweisend eine Feder (16), um eine Kraft auf den Kolben (3) in Richtung des Dichtsitzes (2) auszuwirken.

5. Ventil nach einem der Ansprüche 1 bis 4, bei dem ein Verhältnis des ersten Durchmessers (25) zu dem zweiten Durchmesser (26) so eingestellt ist, dass in der Schließposition des Kolbens (3) bei Druckgleichheit im Einlass (1) und im Steuerraum (5) eine vorgegebene Schließkraft auf den Kolben (3) in Richtung des Dichtsitzes (2) wirkt.

6. Ventil nach einem der Ansprüche 1 bis 5, bei dem das Pilotventil (15) einen Anker (8) aufweist, der abhängig von einer Bestromung des Pilotventils (15) relativ zu dem Gehäuse (20) verschiebbar ist, und bei dem das Pilotventil (15) ein Dichtelement (7) aufweist, das mit dem Anker (8) gekoppelt ist und das relativ zu der Pilotöffnung (6) verschiebbar ist, um die Pilotöffnung (6) wahlweise zu verschließen oder freizugeben.

7. Ventil nach einem der Ansprüche 1 bis 6, bei dem ein Verhältnis eines Querschnitts der Pilotöffnung (6) zu einem Querschnitt der Ausgleichsleitung (4, 18) so eingestellt ist, dass bei freigegebener Pilotöffnung (6) ein Druck im Steuerraum (5) kleiner ist als ein Minimaldruck um den Kolben (3) vom Dichtsitz (2) abzuheben.

8. Ventil nach einem der Ansprüche 1 bis 7, bei dem das Pilotventil (15) als stromlos offenes Ventil ausgebildet ist.

9. Ventil nach einem der Ansprüche 1 bis 7, bei dem das Pilotventil (15) als stromlos geschlossenes Ventil ausgebildet ist.

10. Airbagsystem für ein Kraftfahrzeug, aufweisend:
- ein Ventil (100) nach einem der Ansprüche 1 bis 9,
- einen Gasgenerator, der mit dem Einlass (1) verbunden ist, und
- einen Airbag, der mit dem Auslass (14) verbunden ist.

## Claims

1. Valve for an airbag system for a motor vehicle, having:
- a housing (20) which extends along a longitudinal axis (21) and which surrounds a cavity (22), having a narrowed portion (17), and a control chamber (5),
- an electrically switchable pilot valve (15) which selectively closes off or opens up a pilot opening (6) of the control chamber (5),
- a piston (3) which is arranged in the cavity (22) and which can be displaced relative to the housing (20) along the longitudinal axis (21),
- a compensating line (4, 18) which connects an inlet (1) of the valve (100) to the control chamber (5) for fluidic communication,
**characterized in that,**
- on the narrowed portion (17), there is formed a sealing seat (2) for blocking, in a closed position, in which the piston (3) is in contact with the sealing seat (2), and for enabling, in further positions, a gas flow from the inlet (1) to an outlet (14) of the valve (100),
- the control chamber (5) is arranged on a first side (24) of the piston (3), which first side faces away from the sealing seat (2), and
- the piston (3) has a first diameter (25) on a side (23) facing the sealing seat (2) and a second diameter (26) on the first side (24), wherein the first diameter (25) is smaller than the second diameter (26).

2. Valve according to Claim 1, wherein the compensating line (4) is arranged in the piston (3).

3. Valve according to Claim 1 or 2, wherein the compensating line (18) is arranged in the housing (20).

4. Valve according to one of Claims 1 to 3, having a spring (16) for applying a force to the piston (3) in the direction of the sealing seat (2).

5. Valve according to one of Claims 1 to 4, wherein a ratio of the first diameter (25) to the second diameter (26) is set in such a way that, in the closed position of the piston (3), with equal pressure in the inlet (1) and the control chamber (5), a predefined closing force acts on the piston (3) in the direction of the sealing seat (2).

6. Valve according to one of Claims 1 to 5, wherein the pilot valve (15) has an armature (8) which can be displaced relative to the housing (20) in a manner dependent on an electrical energization of the pilot valve (15), and wherein the pilot valve (15) has a sealing element (7) which is coupled to the armature (8) and which can be displaced relative to the pilot opening (6) for selectively closing off or opening up the pilot opening (6).

7. Valve according to one of Claims 1 to 6, wherein a ratio of a cross section of the pilot opening (6) to a cross section of the compensating line (4, 18) is set in such a way that, with the pilot opening (6) opened up, a pressure in the control chamber (5) is lower than a minimum pressure for lifting the piston (3) off from the sealing seat (2).

8. Valve according to one of Claims 1 to 7, wherein the pilot valve (15) is designed as a valve which is open when electrically deenergized.

9. Valve according to one of Claims 1 to 7, wherein the pilot valve (15) is designed as a valve which is closed when electrically deenergized.

10. Airbag system for a motor vehicle, having:
- a valve (100) according to one of Claims 1 to 9,
- a gas generator which is connected to the inlet (1), and
- an airbag which is connected to the outlet (14).

## Revendications

1. Soupape pour un système de coussin gonflable pour un véhicule automobile, présentant :
- un corps (20) qui s'étend le long d'un axe longitudinal (21) et qui entoure une cavité (22) ayant un rétrécissement (17) et un espace de commande (5),
- une soupape pilote à commutation électrique (15) qui obture ou libère sélectivement un orifice pilote (6) de l'espace de commande (5),
- un piston (3) qui est disposé dans la cavité (22) et qui peut être déplacé le long de l'axe longitudinal (21) par rapport au corps (20),
- une conduite d'équilibrage (4, 18) qui relie une entrée (1) de la soupape (100) à l'espace de commande (5) pour la communication fluidique, **caractérisée en ce que**
- au niveau du rétrécissement (17), un siège d'étanchéité (2) est réalisé pour bloquer un flux de gaz de l'entrée (1) à une sortie (14) de la soupape (100) dans une position de fermeture dans laquelle le piston (3) est en contact avec le siège d'étanchéité (2), et pour le libérer dans d'autres positions,
- l'espace de commande (5) est disposé sur un premier côté (24) du piston (3), détourné du siège d'étanchéité (2), et
- le piston (3) présente sur un côté (23) tourné vers le siège d'étanchéité (2) un premier diamètre (25) et présente sur un premier côté (24) un deuxième diamètre (26), le premier diamètre (25) étant inférieur au deuxième diamètre (26).

2. Soupape selon la revendication 1, dans laquelle la conduite d'équilibrage (4) est disposée dans le piston (3) .

3. Soupape selon la revendication 1 ou 2, dans laquelle la conduite d'équilibrage (18) est disposée dans le corps (20) .

4. Soupape selon l'une quelconque des revendications 1 à 3, présentant un ressort (16) pour exercer une force sur le piston (3) en direction du siège d'étanchéité (2).

5. Soupape selon l'une quelconque des revendications 1 à 4, dans laquelle un rapport entre le premier diamètre (25) et le deuxième diamètre (26) est réglé de telle sorte que dans la position de fermeture du piston (3), en cas d'égalité des pressions dans l'entrée (1) et dans l'espace de commande (5), une force de fermeture prédéfinie agit sur le piston (3) en direction du siège d'étanchéité (2).

6. Soupape selon l'une quelconque des revendications 1 à 5, dans laquelle la soupape pilote (15) présente un induit (8) qui peut être déplacé par rapport au corps (20) en fonction d'une excitation de la soupape pilote (15), et dans laquelle la soupape pilote (15) présente un élément d'étanchéité (7) qui est couplé avec l'induit (8) et qui peut être déplacé par rapport à l'orifice pilote (6) afin de fermer ou de libérer sélectivement l'orifice pilote (6).

7. Soupape selon l'une quelconque des revendications 1 à 6, dans laquelle un rapport entre une section transversale de l'orifice pilote (6) et une section transversale de la conduite d'équilibrage (4, 18) est réglé de telle sorte que lorsque l'orifice pilote (6) est libéré, une pression dans l'espace de commande (5) est inférieure à une pression minimale pour soulever le piston (3) du siège d'étanchéité (2).

8. Soupape selon l'une quelconque des revendications 1 à 7, dans laquelle la soupape pilote (15) est réalisée sous la forme d'une soupape ouverte hors tension.

9. Soupape selon l'une quelconque des revendications 1 à 7, dans laquelle la soupape pilote (15) est réalisée sous la forme d'une soupape fermée hors tension.

10. Système de coussin gonflable pour un véhicule automobile, présentant :
- une soupape (100) selon l'une quelconque des revendications 1 à 9,
- un générateur de gaz qui est relié à l'entrée (1), et
- un coussin gonflable qui est relié à la sortie (14) .
